# EUROPEAN PATENT SPECIFICATION

(11) **EP 3 242 252 B1**
(45) Date of publication and mention of the grant of the patent: **29.01.2020**
(21) Application number: 16168540.9
(22) Date of filing: 06.05.2016
(51) Int. Cl.: G06K 19/06

(54) **MULTI-DIMENSIONAL GRAPHICAL CODE**
MEHRDIMENSIONALE GRAFISCHE CODES
CODE GRAPHIQUE MULTIDIMENSIONNEL

(43) Date of publication of application: 08.11.2017
(73) Proprietor: Purzer, Doris Renate, 80637 Munich (DE)
(72) Inventor: Purzer, Doris Renate, 80637 Munich (DE)
(74) Representative: Qip Patentanwälte Dr. Kuehn & Partner mbB

(56) References cited:
- EP-A1- 2 858 010
- US-A1- 2010 246 984
- US-A1- 2011 231 270
- US-A1- 2014 263 669

## Description

### FIELD OF THE INVENTION

The invention relates to a graphical code as well as to a method, a computer program and a computer-readable medium for encoding and/or decoding the graphical code.

### BACKGROUND OF THE INVENTION

Graphical codes are used for transferring numerical data between computing devices via graphical representations, in which the information of the numerical data is encoded into images.

In general, an encoding device encodes the numerical data into a graphical representation, which is then displayed on a screen or printed on paper. After that, a decoding device with a camera or scanner generates image data from the graphical representation and decodes the numerical data from the image data.

The oldest graphical codes are barcodes, in which the numerical data is encoded in a number of parallel lines, which may be scanned with a laser scanner. Later, so called two-dimensional codes have been designed, in which the numerical data is encoded in black-and-white or multi-colored cells, which are arranged in a two-dimensional matrix.

For example, EP 0 672 994 B1 is a patent relating to a two-dimensional code, called QR code.

WO 2012/096793 A1 relates to colored matrix codes that may comprise depth information.

US 2013/0228624 A1 and US 8 186 572 B2 relate to an animated code, which comprises a sequence of two-dimensional codes.

US 9 004 362 B1 and US 2015/0235069 A1 relate to a three-dimensional code, which may be printed out with a 3D printer.

US 9 135 543 B2 relates to a coding methods in which holes of different depths are used for encoding information.

US 2011 231 270 A1 relates to data transmission using optical codes. An optical code is described, which is composed of several images that are displayed on after the other. Each image may be composed of rectangular segments that are differently colored. This prior art is acknowledged in the preamble of claim 1.

US 2010/246 984 A1 relates to an animated image code. Design components in a design layer of the image code can be animated. Data is encoded in code cells in an image code frame, which is composed of rectangular segments.

US 2014/263 669 A1 relates to information exchange via color-space encoded images. Each image may be composed of differently colored rectangular segments arranged in a rectangular grid.

EP 2 858 010 A1 relates to data transmission using optical codes. The optical codes are two-dimensional images of different shapes.

### DESCRIPTION OF THE INVENTION

It is an object of the invention to provide a flexible graphical code with high information density, which may be encoded and decoded in an efficient way.

This objective is achieved by the subject-matter of the independent claims. Further exemplary embodiments are evident from the dependent claims and the following description.

A first aspect of the invention relates to a graphical code displayable on a screen, adapted for being encoded with an encoding device from a numerical code and adapted for being scanned and decoded into the numerical code by a decoding device. In general, the graphical code may be seen as an animated image that is displayed on a screen, i.e. display, on a general device, such as a computer screen, a smartphone screen, a tablet screen, a TV screen or a cinema screen. When displayed on the screen, the animated graphical code may be composed of colored pixels.

According to an embodiment of the invention, the graphical code is based on at least one geometrical object, which is composed or assembled of a plurality of cells, each cell being colored with a color representing a code number and the numerical code being composed of the code numbers of the cells. A cell may be polygon, a triangle or a single pixel. Each cell may only be colored in one color, i.e. may be mono-colored. A geometrical object may be one or more two-dimensional polygons or one or more three-dimensional polytope (for example bordered by polygons). The geometrical object may be colored with at least two different colors, wherein two different cells may be colored with at least two different colors. The geometrical object and in particular the polygons bordering or composing the geometrical object may be tiled with the cells having different colors. It may be possible that the geometrical object comprises more than 10, for example more than 100, different cells.

The colors of the cells represent code numbers. For example, there may be a specific number of different colors and every color may be assigned to a specific code number. Two colors (like green and red or two different red tones) may encode the code numbers 0 and 1. Three or more colors may encode three or more different code numbers. It may be possible that more than 10 or more than 100 different colors are used in the graphical code. This may provide a very high data density for the graphical code.

A numerical code may be any type of digital data. For example, a numerical code may encode a number, a text string, alphanumerical data, etc. The code numbers of the cells and therefore the coloring of the cells is based on the numerical code, which, for example, may be decomposed into a sequence of code numbers, which may be assigned to specific cells of the geometrical object. For example, the numerical code may be decomposed into a byte sequence and the bytes (as code numbers) may be assigned to the cells with the aid of 256 colors (for example 256 tones of a color, such as from dark red to bright red). In general, the numerical code may be composed of bytes or any other type like Float, INT, CHAR, etc. An alphanumerical code also may be seen as a numerical code.

In general, the numerical code may be a bit sequence of a specific length, wherein the length may depend on the storage capacity of the graphical code. This storage capacity may depend on the numbers of colors and/or numbers of cells used for composing the graphical code. For example, the numerical code may be a string of chars or a special data structure, which may be decomposed into a byte sequence or a sequence of smaller code numbers.

Furthermore, the graphical code may be adapted for being animated on the screen, i.e. may be an animated graphical code. The graphical code is composed of a sequence of images, which are displayable one after the other on the screen. An image may be seen as a static view of the geometric object. For example, an image may be a frame to be displayed on a screen. As a further example, an image may be a data structure that encodes a static view of the geometric object, such as pixel data or vector data.

When the sequence of images is displayed on a screen, it shows an animation of the geometrical object. In other words, the geometrical object is shown differently in different images, whereas the sequence of images generates an impression of continuous change of the view of the geometrical object. An animation may be defined as a sequence of static images that differ only minimally from each other and which when rapidly display one after the other (i.e. for example more than 5 images per second) generate an illusion of motion and change for a person viewing the images.

It has to be noted that the sequence of images may be designed to be repeated continuously. For example, a view point may move around the geometrical object in a continuous way. A difference between the last image in the sequence and the first image may not be bigger than between two consecutive images within the sequence.

The geometrical object with the differently colored cells in general may be represented in a three-dimensional way in the memory of the decoding device. For example, the vertices of the geometrical object (i.e. corners of the cells) may be stored with three values.

In such an animated graphical code, more data may be encoded as in a comparable static graphical code. On the other hand, the graphical code may be visually appealing, since the graphical code may be based on a moving geometrical object.

According to an embodiment of the invention, the animation comprises a movement of the geometrical object and/or of a view point with respect to the geometrical object, such that the sequence of images shows different two-dimensional projections of the geometrical object. A projection of the geometrical object may be defined by a point of view and a screen plane onto which the geometrical object is projected.

According to an embodiment of the invention, the two-dimensional projected geometrical object is shown as moving in a three-dimensional way, when the images of the sequence of images are displayed one after the other on the screen. For example, the geometrical object may be shown rotating. In other words, the view point (or point of view) used for generating the two-dimensional projection may move relative around the tree-dimensional object. For generating the graphical code, the geometrical object may be rendered from different directions, i.e. may be transformed into different two-dimensional projections, which show the geometrical object from different directions. Each image may be a (two-dimensional) static image of the geometrical object seen from a specific direction. In particular, the viewing direction for the images may be chosen in such a way, that the graphical code is moving, when the sequence of images is displayed one after the other. For example, the viewing point may wander around the geometrical object and/or may have different distances to the geometrical object. In a contrary way, the geometrical object may be moving and/or rotating and the viewing direction may be fixed.

According to an embodiment of the invention, the animation comprises a morphing of the geometrical object, such that the sequence of images shows the geometrical object in different images differently distorted. For example, a morphing of the geometrical object may be performed by moving vertices of the geometrical object relative to each other. A specific part (such as a cell or a number of neighboring cells) of the geometrical object may become bigger than another part of the geometrical object.

During a movement of the geometrical object, the distances between vertices of the geometrical object do not change (in three-dimensional space). During morphing, the distances between specific vertices of the geometrical object change.

According to an embodiment of the invention, the geometrical object is a three-dimensional object. For example, the geometrical object may be a polytope (such as a cube or a tetrad) composed of the cells and/or may be composed of polygons as faces or sides, which are composed of the cells.

According to an embodiment of the invention, the geometrical object has at least two sides and/or faces, which are not completely visible in all of the images. In such a way, the complete numerical code can only be decoded from images showing the geometrical object from different sides. For example, from a rotating cube, only three faces are visible in one image. For decoding the information of the complete graphical code, at least two images showing the cube from opposite directions may be necessary.

According to an embodiment of the invention, the geometrical object is composed of at least two two-dimensional faces, each face being assembled of a plurality of cells. For example, the faces and/or sides may be faces of a polytope (such as a cube or tetrad). Every face may be tiled into equally shaped cells, such as squares, rectangles or triangles.

According to an embodiment of the invention, the cells are two-dimensional (i.e. flat) polygons. Every cell may be a triangle, a rectangle, a circle composed of primitives like triangles, a point which is composed of a single or more screen pixels, etc.

According to an embodiment of the invention, the cells have the same (three-dimensional) shape in a three-dimensional representation of the geometrical object. For example, all cells may be equally shaped triangles or rectangles, which, however, may be orientated differently in three-dimensional space.

It has to be noted that two-dimensional projections of cells may have different shapes. For example, a parallel projection of a rectangle may be a parallelogram.

According to an embodiment of the invention, a reference area is displayed in at least some of the images, which reference area varies between images to encode reference data of the graphical code. The reference area may be displayed in every image and/or may be an area displayed besides of the moving geometrical object, which may be not moving. The reference area may be used for the decoding device. For example, the reference area may encode, how colors may be mapped to code numbers and/or how images may be assigned to viewing directions. In general, calibration may be performed in view of color and/or in view of movement, for example to compensate hand movement.

According to an embodiment of the invention, the reference area is colored in different colors in different images, which colors represent possible colors for cells of the graphical code. For example, the reference area may sequentially show all some specific colors for the graphical code that may be used for calibrating the decoding device. Therefore, different lighting conditions (light / dark) in the vicinity of the device showing the code may be taken into account.

For example, the reference area runs through a predefined sequence of all different colors used for encoding code numbers. For example, the colors are shown in the sequence of their assigned code numbers (for example from code numbers 0 to 15). From this, the encoding device may determine, which color is assigned to which code and may be calibrated to the specific color. Furthermore, the encoding device may determine the number of images after which the sequence of images is repeated.

According to an embodiment of the invention, the reference area varies in such a way that a decoding device with a camera for encoding the graphical code is synchronizable with the graphical code. It also may be possible that the reference area changes its shape and/or shows a predefined sequence of symbols, which may be used for synchronizing the decoding device. For example, a special form of the reference area (such as an equilateral triangle) and/or a special symbol may indicate the start of the sequence of images.

A further aspect of the invention relates to a method for encoding a graphical code as described in the above and in the following. The method may be performed by an encoding device, which may be any computing device adapted for transforming the numerical code into the graphical code. For example, the encoding device also may comprise a screen, where the animated graphical code is displayed.

According to an embodiment of the invention, the method comprises: receiving a numerical code and transforming the numerical code into a sequence of code numbers. As already mentioned, the numerical code may be a sequence of bits, bytes, etc., which may be transformed into a sequence of code numbers, for example by splitting or another algorithm. During these steps, the numerical code also may be encrypted.

According to an embodiment of the invention, the method further comprises: receiving reference data for the graphical code, the reference data comprising: geometrical data, color assignment data and cell assignment data, the geometrical data describing a geometrical composition of the cells into the geometrical object, the color assignment data describing an assignment of code numbers to different colors and the cell assignment data describing an assignment of a position in the sequence of code numbers to a cell of the geometrical object. The geometrical data also may comprise information about a morphing of the geometrical object.

For generating the graphical code from the sequence of code numbers, further information is needed. For example, the geometrical data may comprise a model of the geometrical object, in which the positions of the cells and/or the composition of the geometrical object from the cells is stored. Furthermore, the geometrical data may comprise information about the different point of views used for generating the sequence of images, such as a path around the geometrical object.

The color assignment data may comprise a table or parameters for an algorithm, with which a code number may be mapped to a specific color. It may be possible that from the color assignment data a maximal number of used colors may be determined, which may be used for determining a maximal code number and/or for transforming the numerical code into the sequence of code numbers.

The cell assignment data may comprise information about how the code numbers and therefore the colors are assigned to specific cells of the geometrical object. For example, the geometrical object may be stored as a sequence of cells and this sequence may be used for assigning the code numbers to the cells.

According to an embodiment of the invention, the method further comprises: generating the sequence of images from the sequence of code numbers and the reference data. Putting all information together, the sequence of images may be rendered. For example, the geometrical object with colored cells may be stored as a three-dimensional representation and may be rendered with standard methods. For example, the rendering may be performed by the DirectX© or OpenGL© rendering pipeline.

According to an embodiment of the invention, the method further comprises: storing the sequence of images in a file, a database or in a cloud-based database. It may be possible that the graphical code is rendered into a file and not directly to the screen and/or frame buffer of a display. For example, such a file may be transmitted via E-mail, HTTP, HTTPs, a webservice or via an Internet page to a further device, which then may display the file (such as an animated gif-file, mp3-file or mp4-file) without any knowledge of the encoding method.

According to an embodiment of the invention, the method further comprises: displaying the sequence of images of the graphical code. As already mentioned, this may be either performed directly by the encoding device or with a further device communicatively connected with the encoding device.

It may be possible that the animated graphical code is displayed directly by rendering every image of the sequence, when it is needed. It also may be possible that the sequence of images may be rendered into one or more data files (such as an image file for each for the images, or a movie file for the sequence of images) and that the content of these one or more files is displayed.

A further aspect of the invention relates to a method for decoding a graphical code as described in the above and in the following. The method may be performed by a decoding device, which may be any computing device adapted for transforming the numerical code into the graphical code. For example, the decoding device also may comprise a scanner or camera for acquiring images of the graphical code, which are displayed on a screen.

According to an embodiment of the invention, the method comprises: receiving a sequence of raw images comprising image data from a camera, which has recorded the graphical code displayed on a screen; and extracting a sequence of images of the graphical code from the sequence of raw images. For example, a person viewing the graphical code may direct a mobile device with a camera towards the graphical code and may start a special application, which start to perform the method. The application may acquire a sequence of raw images (such as an mp3-file) and may extract the sequence of images from the raw images.

For example, the sequence of raw images may be restricted to a rectangular area in which the graphical code and optionally the reference area is displayed. Furthermore, for example with the aid of the reference area, it may be determined, when the sequence of raw images repeats and the redundant images may be discarded. Also, again with the aid of the reference area, redundant successive images may be discarded.

According to an embodiment of the invention, the method further comprises: receiving reference data for the graphical code and/or extracting reference data from the graphical code; and decoding the numerical code from the extracted sequence of images using the reference data. For encoding the graphical code, the information used for decoding the graphical code may be necessary. This information may be referenced and/or at least partially encoded in the reference area.

The reference data also may contain geometrical data, color assignment data and/or cell assignment data as described above and below. One possibility to decode the code numbers from the cells may be to render each cell as a mask with the same parameters as the corresponding image was rendered. This mask may be overlaid with the corresponding image and a color value may be extracted from the mask. With the aid of the color assignment data and the cell assignment data, the numerical code may be reconstructed. This all may be done in parallel with the shaders (fragment shaders and vertex shaders) of a rendering pipeline supported by many devices adapted for rendering three-dimensional geometrical objects.

A further aspect of the invention relates to a computer program for encoding and/or decoding a graphical code as described in the above and in the following, which computer program, when being executed by a processor, is adapted to carry out the steps of the methods as described in the above and in the following.

For example, the computer program for encoding and/or decoding the graphical code may be an application that may be run in a mobile device such as a tablet computer or smartphone. The computer program may be based on the DirectX© or OpenGL© rendering pipeline.

For example, the graphical code may be encoded and/or displayed by an encoding device (which may be part of an Internet server, a browser, a client PC, a mobile device, etc.) running a first encoding application (which may be part of a web application) and/or may be decoded by a second device, which may be a mobile device used as decoding device, running a second decoding application.

A further aspect of the invention relates to a computer-readable medium, in which such a computer program is stored. A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium also may be a data communication network, e.g. the Internet, which allows downloading a program code. In general, the computer-readable medium may be a non-transitory or transitory medium.

It has to be understood that features of the methods as described in the above and in the following may be features of the graphical code, the computer program and the computer-readable medium as described in the above and in the following, and vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a graphical code according to an embodiment of the invention.
Fig. 2 schematically shows a graphical code according to a further embodiment of the invention.
Fig. 3A to 3B schematically show images of a graphical code according to a further embodiment of the invention.
Fig. 4 shows a flow diagram for a method for encoding and decoding a graphical code according to a further embodiment of the invention.
Fig. 5 shows a data structure for encoding a graphical code according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

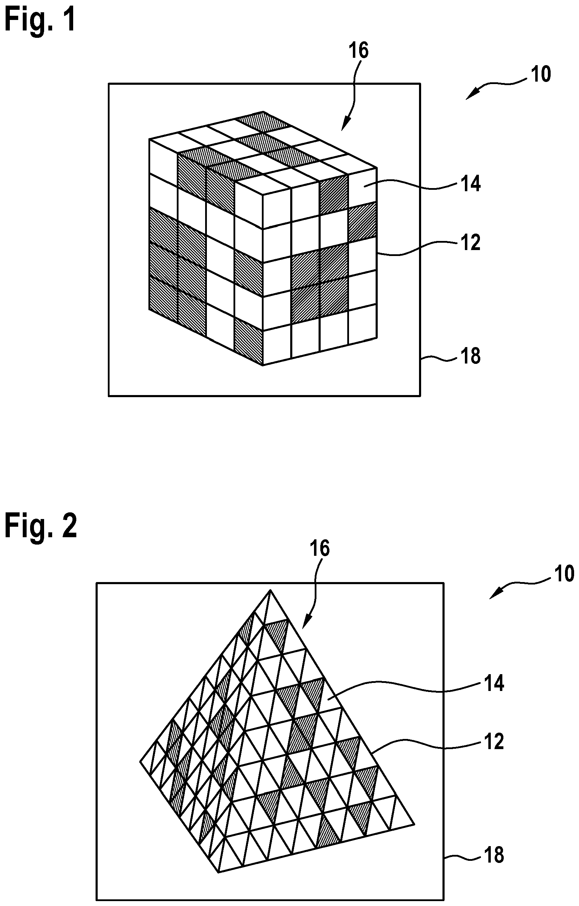

Fig. 1 shows a graphical code 10 based on a geometrical object 12 in the form of a cube. The geometrical object 12 is composed of cells 14, which are differently colored. It has to be noted that in Fig. 1 only two colors (black and white) are shown. However, it is possible that the cells 14 are colored in a plurality of colors. In the different coloring of the cells 14, a numerical code is encoded that may be used to transfer information between two devices in a graphical way, which may be visually appealing for a person.

The geometrical object 12 may be a three-dimensional object (here a cube) and/or may be composed of at least two two-dimensional faces 16 or sides, wherein each face 16 is assembled of a plurality of cells 14. For example, as shown in Fig. 1, the cube has six flat faces 16, each of which is composed of a grid of squares or rectangles.

Analogously to Fig. 1, Fig. 2 shows a further graphical code 10 based on a geometrical object 12 in the form of a tetrad. The tetrad has four faces 16, which are composed of cells 14 in the form of triangles.

With respect to Fig. 1 and 2, the graphical code 10 is animated and is displayed on a screen 18. For example, the geometrical object 12 may be shown moving and/or rotating on the screen 18. This may be achieved by showing a sequence of images on the screen 18, which show the geometrical object from different viewpoints and/or different directions (perspectives). The graphical code 10 may have an increased capacity of information with respect to other non-animated codes.

In particular, the geometrical object 12 may have faces 16, which are not completely visible in all of the images. For example, the backside of the cube or the tetrad shown in Fig. 1 and 2 may become visible, when the cube or tetrad is rotated by 180° about a vertical axis. In such a way, by animating the graphical code 10 and rotating the geometrical object 12, all faces 16 and in particular all cells 14 of the geometrical object 12 may be shown in different images. However, there may be no image, in which all faces 16 and/or cells 14 are visible. In such a way, more information may be stored in the animated graphical code 10 as in a static graphical code.

The geometrical object 12 may be three-dimensional and/or may be stored in a three-dimensional representation, i.e. with vertices in three-dimensional coordinates. However, what is shown on the screen 18 in every image is a two-dimensional projection of the geometrical object 12. Such a projection may be defined by a viewpoint and a view direction of a virtual camera.

The cells 14 of the graphical code 10 may be two-dimensional polygons, such as triangles or quadrangles. It also may be that a cell 14 is only a pixel. In the three-dimensional representation, the cells 14 may have the same shape, i.e. may be congruent. For example, the cells 14 may all be equally shaped and/or congruent triangles or rectangles. For example, the cells 14 may be equilateral triangles or squares, all having the same side length.

On the other hand, when the cells 14 are two-dimensionally projected, they may have different shapes. As shown in Fig. 1 and 2, the two-dimensionally projected cells 14 may have different side lengths and/or angles causing a three-dimensional impression (perception).

In Fig. 1 and 2, the cells 14 are all regularly arranged on the faces 16 of the geometrical object. For example, the cells 14 may be arranged in a triangular or rectangular lattice.

In general, the cells 14 may be any planar forms (such as polygons), which may be arranged/composed to any three-dimensional geometrical objects 12 (cubes, pyramids, etc.). It may be further possible that the graphical code comprises more than one of the geometrical objects 12. For example, the graphical code 10 may comprise a three-dimensional representation of a letter or several letters or a logo as one or more geometrical objects 12. In such a way, the graphical code 10 also may comprise information (besides the numerical code) that may be recognized by a person viewing the code. The graphical code 10 may include an encoded numerical code and further human readable graphical information, which, for example, may be used for advertisement.

The different colors of the cells 14 may be assigned to different code numbers that are used for encoding the numerical code. For example, two different colors may be assigned to 0 and 1, the possible values of a bit. In the case, the cells 14 of the graphical code may be colored with 256 different colors, every color may be assigned to a number from 0 to 255 and therefore may encode the possible values of a byte. It has to be noted that different shades of a color also may be seen as different colors.

The numerical code represented by the graphical code 10 is encoded in the colors of the cells 14 together with the assembly and/or arrangement of the cells 14 in the geometrical object 12. When the graphical code 10 is displayed on a screen of a first device and is animated, a further second (decoding) device may acquire images of the graphical code, and may decode the numerical code from these images. To achieve this, the decoding device may reconstruct the three-dimensional arrangement of the cells 14 and their coloring and may deduce the numerical code from these information.

To simplify decoding of the graphical code 10, every cell 14 may be colored uniformly. This may mean that the interior of each cell 14 may have the same color.

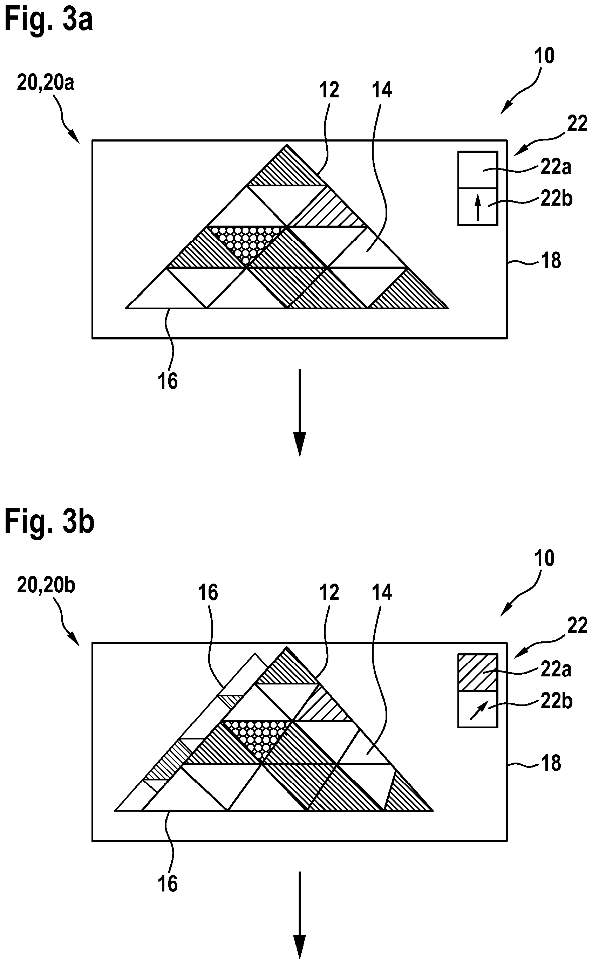

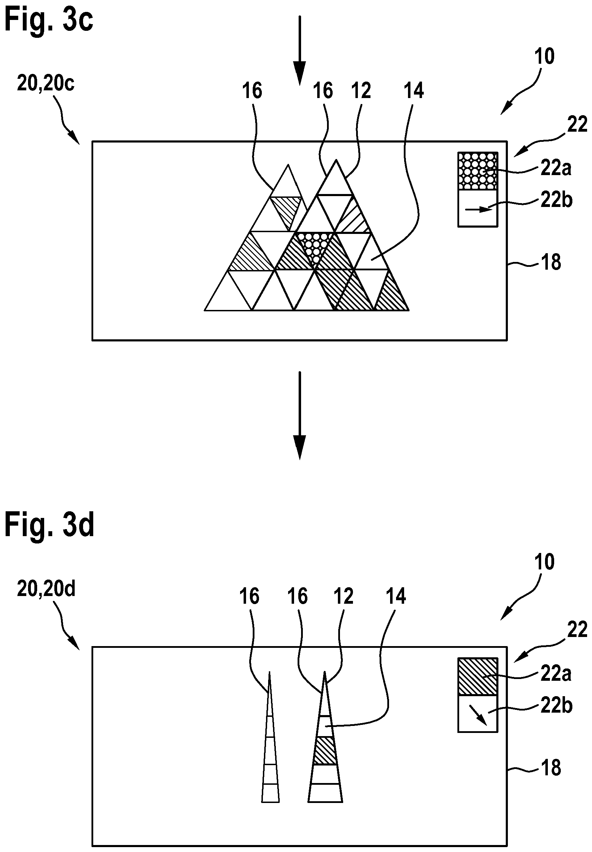

Fig. 3A to 3D show four different images 20 of a further possible graphical code 10. The graphical code 10 of Fig. 3A to 3D comprises two parallel triangles as geometrical object(s) 12, which are tiled into a plurality of smaller, congruent triangles, which are used as cells 14 for the graphical code. During the images 20a to 20d, the triangles are rotating. Note that in Fig. 3A to 3C (i.e. in the images 20a, 20b, 20c), some of the cells 14 of the second triangle are not visible, since they are masked, occluded and/or hided by the first triangle. In Fig. 3D, where the triangles are nearly shown from the side, the triangles are so deformed by the two-dimensional projection, such that the cells 14 are nearly not visible. However, the image 20d may be necessary such that a continuous rotation is shown, when the images 20a to 20d are shown after each other.

The graphical code 10 of Fig. 3A to 3D furthermore comprises a reference area 22. The reference area 22 is displayed in the images 20a to 20d and does not move. However, the reference area 22 varies between the images 20a to 20d to encode reference data of the graphical code.

In a first subarea 22a, in different images the reference area 22 is colored in the possible different colors of the graphical code 10, which colors represent possible colors for the cells 14 of the graphical code 10. In Fig. 3A to 3D, four different colors are indicated with different patterns, because of the black-and-white nature of the drawings. In changing lighting situations, a colored reference 22 may be used for recalculating the original colors.

When the graphical code 10 is animated by showing the images 20 one after the other, the subarea 22a of the reference area 22 runs through a predefined sequence of all different colors used for encoding code numbers. It also may be possible that the reference area 22 does not change over time.

Due to the reference area 22 and/or its subarea 22a, distorted color values caused by a different lighting of the screen 18 and/or another calibration of the screen 18 may be compensated.

Furthermore, the reference area 22 comprises a subarea 22b, which varies in such a way that a decoding device is synchronizable with the graphical code 10. For example, the subarea comprises an arrow which indicates the current view direction. The direction of this arrow may be evaluated and an assignment of a image to a view direction may be derived. It also may be possible that the synchronization of the decoding device with the graphical code 10 is performed with the subarea 22a. For example, the number of images may be equal or a multiple of the number of possible colors. The synchronization may be performed by finding an image, where the possible colors in the reference area 22 start to repeat.

It has to be noted that the graphical code 10 may have a plurality of images 20, which, for example, may be shown with a frequency of about 40 Hz. In such a way, a graphical code may be composed of, for example, 100 images and more.

With respect to the first triangle shown alone in Fig. 3A, without the other triangle, the same animation shown in Fig. 3A to 3D may be achieved by distorting the triangle in the horizontal direction. More general types of morphing may be achieved by distorting the first triangle in different parts differently. For example, the lower left cell 14 may be enlarged, while the right row of cells 14 may be scaled down. Due to this, the distances of the vertices of the other cells 14 in between have to be adapted, such that the geometrical object is not teared apart.

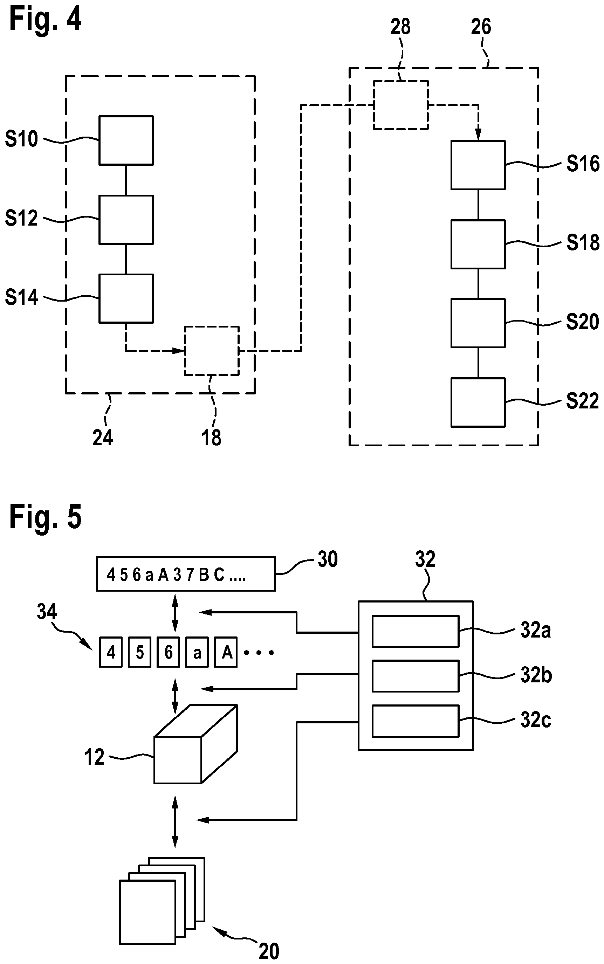

Fig. 4 shows a flow diagram with the steps S10 to S14 of a method for encoding a graphical code 10 with an encoding device 24 and with the steps S16 to S22 for decoding the graphical code 10 with a decoding device 26.

Both the encoding device 24 and the decoding device 26 may be computing devices, which are adapted for running programs for performing the respective methods. In such a case, the encoding device 24 also displays the graphical code 10, it may have a screen 18. Furthermore, the decoding device 26 may have a camera 28 for acquiring images of images 22 of the displayed graphical code 10.

In step S10, a numerical code 30 (see Fig. 5) is received. For example, the numerical code 30 may be a sequence of bytes or a data structure, which has to be encoded into the graphical code 10. For the encoding and decoding of the graphical code 10, the information content of the numerical code 30 is not important.

For example, the method may be performed by a library and the numerical code 30 may be provided from a further program or application, which asks the library to generate the graphical code 10.

Furthermore in step S10, reference data 32 for the graphical code 10 is received. This reference data 32 may describe, how the geometrical object 12 is formed, how the cells 14 may be colored and how the numerical code may be transformed into a coloring of the cells.

For example, the reference data 32 may comprise geometrical data 32a, which encodes the geometrical structure of the geometrical object. For example, the geometrical data 32a describes a geometrical composition of the cells 14 into the geometrical object 12. For example, the geometrical data 32a may comprise a model of the geometrical object 12, which, for example, may be stored in a sequence of triangles. Each of these triangles may represent a cell 14 of the geometrical object 12. However, it also may be possible that two or more of the triangles of the model represents a single cell 14, which, for example, may be a polygon.

Furthermore, the reference data 32 may comprise color assignment data 32b, which describes an assignment of code numbers to different colors. For example, the color assignment data may comprise the number of different possible colors, a possible color range and/or how a code number may be assigned to a color. For example, there may be n different colors and a color may be calculated from a code number by setting its red value to an offset value plus the code number times a multiplier value. These values all may be provided in the color assignment data.

The reference data 32 also may comprise cell assignment data 32c, which describes an assignment of a position in the sequence of code numbers to a cell 14 of the geometrical object 12. For example, the cells 14 of the geometrical object may be numbered in a list stored in the cell assignment data 32c. It also may be possible that the above mentioned model is used as cell assignment data 32c, in which the sequence of cells 14 is numbered in the way, how the triangles are stored one after the other in the model.

It also may be possible that the assignment of code numbers to colors and/or to cell position is based on an algorithm.

It has to be noted that the reference data 22 may be supplied as a data structure to the program performing the method, which then may be very flexible in generating the graphical code 10. However, it also may be possible that some or all of the parameters needed for generating the graphical code are hard coded into the programs running on the encoding and/or the decoding devices.

In step S12, the numerical code 30 is transformed into a sequence 34 of code numbers. This transformation may be based on the number of possible colors and therefore number of possible code numbers (which may be stored in the color assignment data 32b). For example, using the binary representation of the numerical code 30, the numerical code may be split into the code numbers. It also may be possible that in this step S12, the numerical code 30 is encrypted and/or otherwise transformed, for example to distribute the code numbers of the sequence 34 more uniformly. The encryption of the numerical code 30 also may be performed in step S10.

After that, from the sequence 34 of code numbers, the coloring of the individual cells 14 of the geometrical object 12 is determined and a three-dimensional representation of the geometrical object 12 with the colored cells 14 (such as a colored model) may be generated.

From the three-dimensional representation, the sequence of images 20 may be generated. For example, the geometrical data 22a also may comprise information about the number of images 22. Also, the geometrical data 22a may comprise information about the view direction and/or view position for each image 20. For example, the images 20 of the graphical code 10 may be generated based on a fixed number of images (such as m images), and the geometrical object is rotated once about an axis during these number of images.

It has to be noted that the rendering of the images 20 may be performed by a rendering pipeline supported by a graphics processor of the encoding device 24. Also data structures like a model of the geometrical object encoding positions of vertices of the cells may be supported by the rendering pipeline.

In step S14, the sequence of images 20 may be stored in a file and/or displayed on the screen 18. For example, the encoding device 24 may be a server, which generates the images 20 and stores them in a movie-encoding file such as an mp4-file. The file then may be sent via Internet to a device with the screen 18 (such as a personal computer) and may be there displayed.

In step S16, a sequence of raw images is received, which sequence of raw images may comprise image data from a camera 28, which has recorded the graphical code 10 displayed on the screen 18. For example, a person may have directed its smartphone against a screen 18 displaying the graphical code 10 and an application is executed in the smartphone, which turns the smartphone into a decoding device 26. However, the acquiring of the raw images and the decoding of the graphical code 10 may be performed in different devices.

In step S18, a sequence of images 20 of the graphical code 10 is extracted from the sequence of raw images. For example, an outer border of the graphical code may be determined and the sequence of raw images may be cut to this border. Furthermore, redundant raw images (i.e. showing the same or nearly the same content) may be discarded.

In step S20, receiving reference data 32 may be extracted from the graphical code 10 and/or reference data 32 may be received from a further source. For example, when the graphical code 10 has a reference area 22, indicating the number of possible colors and/or providing synchronization information, these data may be extracted from the graphical code 10.

In general, the reference data 32 may contain the same information as used for encoding the graphical code 10 (see Fig. 5). This information may be at least partially hard coded into the program for decoding the graphical code 10, may be directly encoded into the graphical code 10 and/or may be referenced in the graphical code 10. For example, the reference area 22 may encode a reference identifier, which links the graphical code 10 with a specific reference data 32.

In step S22, the numerical code 30 is decoded from the extracted sequence of images 20 using the reference data 32.

For example with reference to Fig. 5, in a first substep, the colored three-dimensional representation of the geometrical object 12 may be reconstructed from the images 20. For all or some of the images 20, the view point and/or the view direction may be determined (for example with the aid of the synchronization and/or the reference area 22). Then, with the aid of this view point/view direction, every or at least some of the cells 14 may be rendered as a mask and the mask may be used to extract the color value of the respective cell 14.

In a second substep, the color values of the cells 14 may be mapped to code numbers and the code numbers may be aligned in a sequence as described by the reference data 32.

In a third substep, the code numbers may be transformed back to the numerical code 30, which also may be decrypted, when it was encrypted during encoding.

It has to be noted that the numerical code 30 may be decoded nearly in real time, when the decoding is performed with a parallel executing program that may be executed by shaders of a rendering pipeline, which is supported by a graphics processor. In such a way, a graphical code 10 with a high number of different colors (such as 256 different red tones) and with a high number of cells 14 (such as more than 100 cells) may be evaluated.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: graphical code
- 12: geometrical object
- 14: cell
- 16: face
- 18: screen
- 20: image
- 20a: image
- 20b: image
- 20c: image
- 20d: image
- 22: reference area
- 22a: first subarea
- 22b: second subarea
- 24: encoding device
- 26: decoding device
- 28: camera
- 30: numerical code
- 32: reference data
- 32a: geometrical data
- 32b: color assignment data
- 32c: cell assignment data
- 34: sequence of code numbers

## Claims

1. A graphical code (10) displayable on a screen (18), being encoded with an encoding device (24) from a numerical code (30) and adapted for being scanned and decoded into the numerical code (30) by a decoding device (26), **characterized in that** the graphical code (10) is based on at least one three-dimensional object (12), which is composed of a plurality of cells (14), each cell (14) being a two-dimensional polygon and being colored with a color representing a code number and the numerical code being composed of the code numbers of the cells (14);
wherein the graphical code (10) is composed of a sequence of images (20), which are displayable one after the other on the screen (18), the sequence of images (20) showing an animation of the three-dimensional object (12);
wherein the animation comprises a movement of the three-dimensional object (12) and/or a movement of a view point with respect to the three-dimensional object (12), such that the sequence of images shows different two-dimensional projections of the three-dimensional object (12).

2. The graphical code (10) of claim 1,
wherein, when the images (20) of the sequence of images are displayed one after the other on the screen (18), the two-dimensional projected three-dimensional object (12) is shown moving in a three-dimensional way; and/or
wherein the three-dimensional object (12) is rotating.

3. The graphical code (10) of one of the preceding claims,
wherein the animation comprises a morphing of the three-dimensional object (12), such that the sequence of images shows the three-dimensional object (12) in different images (20) differently distorted.

4. The graphical code (10) of one of the preceding claims,
wherein the three-dimensional object (12) has at least two sides, which are not completely visible in all of the images (20); and/or
wherein the three-dimensional object (12) is composed of at least two two-dimensional faces (16), each face (16) being assembled of a plurality of cells (14).

5. The graphical code (10) of one of the preceding claims,
wherein the cells (14) have the same shape in a three-dimensional representation of the three-dimensional object (12); and/or
wherein two-dimensional projections of cells (14) have different shapes.

6. The graphical code (10) of one of the preceding claims,
wherein a reference area (22) for calibrating a decoding device (26) is displayed in at least some of the images (20).

7. The graphical code (10) of claim 6,
wherein the reference area (22) is colored in different colors, which colors represent possible colors for cells (14) of the graphical code (10).

8. The graphical code (10) of claim 6 or 7,
wherein the reference area (22) varies in such a way that a decoding device (26) with a camera (28) for encoding the graphical code is synchronizable with the graphical code (10).

9. A method for encoding a graphical code (10) according to one of the preceding claims, the method comprising:
receiving a numerical code (30);
transforming the numerical code(30) into a sequence (34) of code numbers;
receiving reference data (32) for the graphical code (10), the reference data (32) comprising at least one of: geometrical data (32a), color assignment data (32b) and cell assignment data (32c), the geometrical data (32a) describing a geometrical composition of the cells (14) into the three-dimensional object (12), the color assignment data (32b) describing an assignment of code numbers to different colors and the cell assignment data (32c) describing an assignment of a position in the sequence (34) of code numbers to a cell (14) of the three-dimensional object (12);
generating the sequence of images (20) from the sequence (34) of code numbers and the reference data (32).

10. The method of claim 9, further comprising:
storing the sequence of images (20) in a file; and/or
displaying the sequence of images (20) of the graphical code (10).

11. A method for decoding a graphical code (10) according to one of claims 1 to 8, the method comprising:
receiving a sequence of raw images comprising image data from a camera (28), which has recorded the graphical code (10) displayed on a screen (18);
extracting a sequence of images (20) of the graphical code (10) from the sequence of raw images;
receiving reference data (32) for the graphical code (10) and/or extracting reference data (32) from the graphical code (10);
decoding the numerical code (30) from the extracted sequence of images (22) using the reference data (32).

12. A computer program for encoding and/or decoding a graphical code (10) according to one of the claims 1 to 8, which computer program, when being executed by a processor, is adapted to carry out the steps of the method of one of claims 9 to 11.

13. A computer-readable medium, in which a computer program according to claim 12 is stored.

## Patentansprüche

1. Grafischer Code (10), der auf einem Bildschirm (18) angezeigt werden kann, und der mit einer Codiervorrichtung (24) aus einem numerischen Code (30) codiert wird und dafür ausgelegt ist, durch eine Decodiervorrichtung (26) gescannt und zu dem numerischen Code (30) decodiert zu werden,
**dadurch gekennzeichnet, dass**
der grafische Code (10) auf mindestens einem dreidimensionalen Objekt (12) basiert, das aus mehreren Zellen (14) zusammengesetzt ist, wobei jede Zelle (14) ein zweidimensionales Polygon ist und mit einer Farbe gefärbt ist, die eine Codenummer darstellt, und der numerische Code aus den Codenummern der Zellen (14) zusammengesetzt ist;
wobei der grafische Code (10) aus einer Folge von Bildern (20) zusammengesetzt ist, die nacheinander auf dem Bildschirm (18) angezeigt werden können, wobei die Folge von Bildern (20) eine Animation des dreidimensionalen Objekts (12) zeigt;
wobei die Animation eine Bewegung des dreidimensionalen Objekts (12) und/oder eine Bewegung eines Betrachtungspunktes in Bezug auf das dreidimensionale Objekt (12) umfasst, dergestalt, dass die Folge von Bildern verschiedene zweidimensionale Projektionen des dreidimensionalen Objekts (12) zeigt.

2. Grafischer Code (10) nach Anspruch 1,
wobei, wenn die Bilder (20) der Folge von Bildern nacheinander auf dem Bildschirm (18) angezeigt werden, das zweidimensionale projizierte dreidimensionale Objekt (12) in dreidimensionaler Bewegung dargestellt wird; und/oder wobei sich das dreidimensionale Objekt (12) dreht.

3. Grafischer Code (10) nach einem der vorhergehenden Ansprüche,
wobei die Animation ein Morphing des dreidimensionalen Objekts (12) umfasst, dergestalt, dass die Folge von Bildern das dreidimensionale Objekt (12) in verschiedenen Bildern (20) unterschiedlich verzerrt darstellt.

4. Grafischer Code (10) nach einem der vorhergehenden Ansprüche,
wobei das dreidimensionale Objekt (12) mindestens zwei Seiten aufweist, die nicht in allen Bildern (20) vollständig sichtbar sind; und/oder
wobei das dreidimensionale Objekt (12) aus mindestens zwei zweidimensionalen Flächen (16) zusammengesetzt ist, wobei jede Fläche (16) aus mehreren Zellen (14) aufgebaut ist.

5. Grafischer Code (10) nach einem der vorhergehenden Ansprüche,
wobei die Zellen (14) die gleiche Form in einer dreidimensionalen Darstellung des dreidimensionalen Objekts (12) aufweisen; und/oder
wobei zweidimensionale Projektionen von Zellen (14) unterschiedliche Formen aufweisen.

6. Grafischer Code (10) nach einem der vorhergehenden Ansprüche,
wobei ein Referenzbereich (22) zum Kalibrieren einer Decodiervorrichtung (26) in mindestens einigen der Bilder (20) angezeigt wird.

7. Grafischer Code (10) nach Anspruch 6,
wobei der Referenzbereich (22) in verschiedenen Farben gefärbt ist, wobei die Farben mögliche Farben für Zellen (14) des grafischen Codes (10) darstellen.

8. Grafischer Code (10) nach Anspruch 6 oder 7,
wobei sich der Referenzbereich (22) in einer solchen Weise ändert, dass eine Decodiervorrichtung (26) mit einer Kamera (28) zum Codieren des grafischen Codes mit dem grafischen Code (10) synchronisiert werden kann.

9. Verfahren zum Codieren eines grafischen Codes (10) nach einem der vorhergehenden Ansprüche, wobei das Verfahren Folgendes umfasst:
Empfangen eines numerischen Codes (30);
Transformieren des numerischen Codes (30) in eine Folge (34) von Codenummern;
Empfangen von Referenzdaten (32) für den grafischen Code (10), wobei die Referenzdaten (32) mindestens eines von Folgendem umfassen:
geometrische Daten (32a), Farbzuordnungsdaten (32b) und Zellenzuordnungsdaten (32c), wobei die geometrischen Daten (32a) eine geometrische Zusammensetzung der Zellen (14) zu dem dreidimensionalen Objekt (12) beschreiben, wobei die Farbzuordnungsdaten (32b) eine Zuordnung von Codenummern zu verschiedenen Farben beschreiben und die Zellenzuordnungsdaten (32c) eine Zuordnung einer Position in der Folge (34) von Codenummern zu einer Zelle (14) des dreidimensionalen Objekts (12) beschreiben;
Generieren der Bildfolge (20) aus der Folge (34) von Codenummern und den Referenzdaten (32).

10. Verfahren nach Anspruch 9, des Weiteren umfassend:
Speichern der Folge von Bildern (20) in einer Datei; und/oder
Anzeigen der Folge von Bildern (20) des grafischen Codes (10) .

11. Verfahren zum Decodieren eines grafischen Codes (10) nach einem der Ansprüche 1 bis 8, wobei das Verfahren Folgendes umfasst:
Empfangen einer Folge von Rohbildern, die Bilddaten umfassen, von einer Kamera (28), die den auf einem Bildschirm (18) angezeigten grafischen Code (10) aufgezeichnet hat;
Extrahieren einer Folge von Bildern (20) des grafischen Codes (10) aus der Folge von Rohbildern;
Empfangen von Referenzdaten (32) für den grafischen Code (10) und/oder Extrahieren von Referenzdaten (32) aus dem grafischen Code (10);
Decodieren des numerischen Codes (30) aus der extrahierten Folge von Bildern (22) unter Verwendung der Referenzdaten (32) .

12. Computerprogramm zum Codieren und/oder Decodieren eines grafischen Codes (10) nach einem der Ansprüche 1 bis 8, wobei das Computerprogramm, wenn es durch einen Prozessor ausgeführt wird, dafür ausgelegt ist, die Schritte des Verfahrens nach einem der Ansprüche 9 bis 11 auszuführen.

13. Computerlesbares Medium, auf dem ein Computerprogramm nach Anspruch 12 gespeichert ist.

## Revendications

1. Code graphique (10) affichable sur un écran (18), codé avec un dispositif de codage (24) à partir d'un code numérique (30) et conçu pour être numérisé et décodé en le code numérique (30) par un dispositif de décodage (26),
**caractérisé en ce que**
le code graphique (10) est basé sur au moins un objet tridimensionnel (12), qui est composé d'une pluralité de cellules (14), chaque cellule (14) étant un polygone à deux dimensions et étant coloré avec une couleur représentant un numéro de code et le code numérique étant composé des numéros de code des cellules (14);
dans lequel le code graphique (10) est composé d'une séquence d'images (20), qui sont affichables les unes après les autres sur l'écran (18), la séquence d'images (20) montrant une animation de l'objet tridimensionnel (12);
dans lequel l'animation comprend un mouvement de l'objet tridimensionnel (12) et/ou un mouvement d'un point de vue par rapport à l'objet tridimensionnel (12), de telle sorte que la séquence d'images montre différentes projections en deux dimensions de l'objet tridimensionnel (12).

2. Code graphique (10) selon la revendication 1,
dans lequel, lorsque les images (20) de la séquence d'images sont affichées les unes après les autres sur l'écran (18), l'objet tridimensionnel projeté en deux dimensions (12) est représenté se déplaçant d'une manière tridimensionnelle; et/ou dans lequel l'objet tridimensionnel (12) tourne.

3. Code graphique (10) selon l'une des revendications précédentes,
dans lequel l'animation comprend un morphage de l'objet tridimensionnel (12), de telle sorte que la séquence d'images montre l'objet tridimensionnel (12) dans différentes images (20) déformées différemment.

4. Code graphique (10) selon l'une des revendications précédentes,
dans lequel l'objet tridimensionnel (12) comporte au moins deux côtés, qui ne sont pas complètement visibles dans toutes les images (20); et/ou
dans lequel l'objet tridimensionnel (12) est composé d'au moins deux faces en deux dimensions (16), chaque face (16) étant constituée d'une pluralité de cellules assemblées (14) .

5. Code graphique (10) selon l'une des revendications précédentes,
dans lequel les cellules (14) ont la même forme dans une représentation tridimensionnelle de l'objet tridimensionnel (12) ; et/ou
dans lequel des projections en deux dimensions de cellules (14) ont des formes différentes.

6. Code graphique (10) selon l'une des revendications précédentes,
dans lequel une zone de référence (22) pour étalonner un dispositif de décodage (26) est affichée dans au moins une partie des images (20).

7. Code graphique (10) selon la revendication 6,
dans lequel la zone de référence (22) est colorée en différentes couleurs, lesquelles couleurs représentent des couleurs possibles pour des cellules (14) du code graphique (10) .

8. Code graphique (10) selon la revendication 6 ou 7,
dans lequel la zone de référence (22) varie de telle sorte qu'un dispositif de décodage (26) avec une caméra (28) pour coder le code graphique est synchronisable avec le code graphique (10).

9. Procédé de codage d'un code graphique (10) selon l'une quelconque des revendications précédentes, le procédé comprenant de :
recevoir un code numérique (30);
transformer le code numérique (30) en une séquence (34) de numéros de code;
recevoir des données de référence (32) pour le code graphique (10), les données de référence (32) comprenant au moins l'un parmi : des données géométriques (32a), des données d'affectation de couleur (32b) et des données d'affectation de cellule (32c), les données géométriques (32a) décrivant une composition géométrique des cellules (14) dans l'objet tridimensionnel (12), les données d'affectation de couleur (32b) décrivant une affectation de numéros de code à des couleurs différentes et les données d'affectation de cellule (32c) décrivant une affectation d'une position dans la séquence (34) de numéros de code à une cellule (14) de l'objet tridimensionnel (12);
générer la séquence d'images (20) à partir de la séquence (34) de numéros de code et des données de référence (32).

10. Procédé selon la revendication 9, comprenant en outre de : stocker la séquence d'images (20) dans un fichier; et/ou afficher la séquence d'images (20) du code graphique (10).

11. Procédé de décodage d'un code graphique (10) selon l'une quelconque des revendications 1 à 8, le procédé comprenant de :
recevoir une séquence d'images comprenant des données d'image à partir d'une caméra (28), qui a enregistré le code graphique (10) affiché sur un écran (18) ;
extraire une séquence d'images (20) du code graphique (10) à partir de la séquence d'images brutes;
recevoir des données de référence (32) pour le code graphique (10) et/ou extraire des données de référence (32) du code graphique (10);
décoder le code numérique (30) à partir de la séquence d'images extraite (22) en utilisant les données de référence (32) .

12. Programme informatique pour coder et/ou décoder un code graphique (10) selon l'une quelconque des revendications 1 à 8, dans lequel le programme informatique, lorsqu'il est exécuté par un processeur, est conçu pour exécuter les étapes du procédé selon l'une des revendications 9 à 11.

13. Support lisible par ordinateur, sur lequel est stocké un programme d'ordinateur selon la revendication 12.
